(19) Europäisches Patentamt
European Patent Office
Office européen des brevets

(11) **EP 3 887 086 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **19808551.6**

(22) Anmeldetag: **15.11.2019**

(51) Internationale Patentklassifikation (IPC):
**B23K 20/12** (2006.01)   **B21B 15/00** (2006.01)
**B23K 20/16** (2006.01)   **B23K 20/24** (2006.01)

(52) Gemeinsame Patentklassifikation (CPC):
**B23K 20/12; B21B 15/0085; B23K 20/129; B23K 20/16; B23K 20/24**

(86) Internationale Anmeldenummer:
**PCT/EP2019/081526**

(87) Internationale Veröffentlichungsnummer:
**WO 2020/109035 (04.06.2020 Gazette 2020/23)**

(54) **VERFAHREN ZUM REIBSCHWEISSEN ZWEIER WARMER METALLPRODUKTE**

METHOD FOR FRICTION WELDING TWO WARM METAL PRODUCTS

PROCÉDÉ DE SOUDAGE PAR FRICTION DE DEUX PRODUITS MÉTALLIQUES CHAUDS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2018 DE 102018220218**
**19.09.2019 DE 102019214295**

(43) Veröffentlichungstag der Anmeldung:
**06.10.2021 Patentblatt 2021/40**

(73) Patentinhaber: **SMS Group GmbH**
**40237 Düsseldorf (DE)**

(72) Erfinder:
• **JEPSEN, Olaf Norman**
**57072 Siegen (DE)**
• **MERZ, Jürgen**
**57223 Kreuztal (DE)**
• **OHLERT, Joachim**
**40237 Düsseldorf (DE)**
• **MÜLLER, Heinz-Adolf**
**57234 Wilnsdorf (DE)**
• **MÜNKER, Jochen**
**57223 Kreuztal (DE)**
• **SCHEFFE, Kurt**
**57271 Hilchenbach (DE)**
• **ROTH, Ingmar**
**57072 Siegen (DE)**
• **KIPPING, Matthias**
**57562 Herdorf (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**WO-A1-2017/140886    DE-A1- 10 062 193**
**DE-C- 932 303**

**Beschreibung**

Die Erfindung betrifft ein Verfahren zum Verschweißen zweier warmer Metallprodukte, insbesondere vor einem nachfolgenden Warmwalzen.

Stand der Technik

Beim Warmwalzen von metallurgischen Gießprodukten in einem Warmwalzwerk ist es vorteilhaft, wenn das Gießprodukt möglichst lang bzw. quasi endlos lang ist. Zu diesem Zweck wird vereinzelt praktiziert, dass Brammen bzw. Vorbänder, nachdem sie aus einer Gießmaschine oder einem Vorwalzgerüst herausgetreten sind, zunächst an ihren Enden schopfgeschnitten werden. Das schopfgeschnittene Ende eines voreilenden Vorbandes bzw. einer voreilenden Bramme und die schopfgeschnittene Stirnseite einer nacheilenden Bramme werden deshalb zusammengeführt und miteinander verschweißt, so dass ein längeres Gießprodukt entsteht, welches effizienter warmgewalzt werden kann als eine nur kurze Bramme.

Im Stand der Technik wurden bisher nur Verfahren zum Verschweißen von Brammen realisiert oder beschrieben, in denen eine Zunderbildung entweder verhindert wird oder bei denen der Zunder vor oder während dem Verschweißen entfernt wird. Eine Möglichkeit, die Zunderbildung zu verhindern, besteht darin, das Verschweißen unter einer Inertgasatmosphäre durchzuführen. Eine Entfernung von Zunder kann durch mechanische Bearbeitung, durch hydraulische Entzunderung oder durch Reduktion oder durch Verflüssigung des Zunders erfolgen.

Die EP 0 492 368 B1 offenbart eine Spannvorrichtung zum Stumpfstoßverbinden von Vorbändern. Bevorzugt wird der Einsatz einer Lichtbogenschweiß- oder Induktionsheizvorrichtung.

Die EP 0 510 713 B1 betrifft das Endloswalzen und Verbinden von Vorbändern, das Zusammenpressen der Vorbandenden unter Erzeugung einer Schubbewegung, um eine Relativverschiebung und eine plastische Verformung an den Kopf-Enden-Seiten zu erzeugen. Vor der Verbindung kann das Ende oder der Kopf gebogen werden. Eine Bandseite wird in Schwingung (mittels z. B. Ultraschallwellen) versetzt, wenn die Relativverschiebung beim Zusammenpressen bewirkt wird, um die Zunderentfernung zu begünstigen. Die Relativverschiebung entfernt den Zunder.

Die DE 692 076 73 T2 offenbart Endloswalzen zum Bearbeiten von Endenformen. Nur ein Teil der Breite kommt zur Anlage, insbesondere die Kanten. Die Enden werden erwärmt und zusammengepresst.

Die DE 600 33 495 T2 als deutsche Übersetzung einer europäischen Patentschrift beschreibt das Problem einer Gasblasenbildung beim Laserverschweißen zweier schopfgeschnittener Endbereiche von Brammen aus Stahl. Die unerwünschte Gasblasenbildung entsteht insbesondere, wenn die miteinander verschweißten Endbereiche mit Zunder bzw. Walzzunder bedeckt sind. Zur Vermeidung dieser Gasblasen oder von Entstarrungsrissen schlägt diese Druckschrift vor, Sauerstoff mit desoxidierenden Elementen in den Stahlwerkstoffen zu fixieren. Das Laserverschweißen erfolgt bei Umgebungstemperatur.

Die japanische Patentanmeldung JP 10230302 A offenbart ein Verfahren zum Verschweißen zweier Brammen durch ein Druckschweißverfahren, wobei die miteinander zu verschweißenden Brammenenden vor ihrem Verschweißen unter hohem Druck in einer reduzierenden bzw. nichtoxidierenden Atmosphäre entzundert wurden.

Die deutsche Übersetzung DE 691 06 473 T2 einer europäischen Patentschrift offenbart ein Verschweißen von Brammen mittels Warmpressschweißen selbst dann, wenn die zu verbindenden Oberflächen teilweise mit Oxidzunder bedeckt sind. Gemäß der Lehre dieser Druckschrift muss das Warmpressschweißen dann allerdings unter reduzierender Atmosphäre ausgeführt werden. Umgekehrt lehrt diese Druckschrift ausdrücklich, dass wenn ein Verbinden, insbesondere ein Warmpressverschweißen bei üblichen atmosphärischen Bedingungen ausgeführt wird, sei es erforderlich, die zu verbindenden Enden zuvor durch Entzunderung zu reinigen, weil das Vorliegen von komplexem Oxidzunder den Verbindungsvorgang nachteilig beeinflusst, was zu einer Verringerung der Verbindungsfestigkeit führen würde.

Die deutsche Übersetzung DE 696 28 648 T2 offenbart, dass Oxidzunder, wenn er in eine durch Laserbestrahlung gebildete Schmelze in einer aufgeschmolzenen Fuge zwischen zwei zu verschweißenden Brammen eingebracht wird, zu einer unerwünschten Gasblasenbildung führt. Diese Gasblasen verringern die Festigkeit der Schweißverbindung. Um dieser Gasblasenbildung entgegenzuwirken, wird vorgeschlagen, während des Laserschweißens ein Desoxidationsmittel in die aufgeschmolzene Fuge zuzugeben, beispielsweise durch Verwendung eines Schweißzusatzdrahtes. Auch diese Druckschrift lehrt im Grunde das Entfernen von Zunder vor einem oder während eines Schweißvorgang, um eine unnötige Instabilität der Schweißverbindung zu vermeiden.

Die DE 100 62 193 A1 offenbart ein Verfahren zum Verbinden von warmen Platinen, bei dem die Oberflächen auf ein mögliches Ausmaß entzundert werden und die Überlappung innerhalb von 20 Sekunden nach der Entzunderung abgeschlossen ist, um eine höhere Bruchfestigkeit des Verbindungsabschnittes zu erreichen. Jedoch werden die Platinen nicht mittels Reibschweißen verbunden, sondern durch Scherklingen, auf die eine Presskraft ausgeübt wird. Es wird also kein Reibwert beim Reibschweißen gezielt eingestellt.

Die DE 932 303 C offenbart eine Walzstraße und offenbart, dass hinter der Schere zum Schöpfen eine abermalige Verzunderung der Knüppelenden verhindert werden und dass die Schere erfindungsgemäß direkt vor der Schweißeinrichtung angeordnet sein soll, so dass der Zeitraum, wo eine abermalige Verzunderung eintreten könnte, möglichst klein gehalten bzw. eine Verzunderung ganz vermieden wird.

Im Stand der Technik ist schließlich auch sogenanntes Reibschweißen zum Verschweißen zweier Stahlprodukte bekannt. Dabei werden die beiden Stahlprodukte an ihren zu verbindenden Stirnseiten gegeneinander gepresst und gleichzeitig relativ zueinander bewegt, insbesondere oszilliert. Dadurch entstehen hohe Temperaturen im Bereich der Reibflächen und es kommt zu einem Verschweißen der jeweiligen Enden. Dabei kann es zu einem frühzeitigen Haften der Brammenenden aneinander kommen. Dadurch werden die Brammenenden plastisch verformt und es kommt zu besonders hohen Oszillationskräften für die notwendige Relativbewegung.

Die WO 2017/140886 A1 offenbart die Merkmale des Oberbegriffs des Patentanspruchs 1.

Der Erfindung liegt die Aufgabe zugrunde, ein bekanntes Verfahren zum Verschweißen der Enden zweier Metallprodukte miteinander dahingehend weiterzubilden, dass die zu verschweißenden Enden während des Verschweißens besser relativ zueinander bewegbar bleiben und die Bildung einer hohen Schweißtemperatur begünstigt wird.

Diese Aufgabe wird durch das im Anspruch 1 beanspruchte Verfahren gelöst. Dieses ist dadurch gekennzeichnet, dass das Verschweißen der Enden bzw. Stirnseiten als lineares oder oszillatorisches Reibschweißen durchgeführt wird, wobei der Reibwert zwischen den schopfgeschnittenen Stirnseiten in einem vorbestimmten Wertebereich liegt, und dass der Reibwert eingestellt wird, indem nach dem Schopfschneiden, aber vor dem Verschweißen auf die Stirnseite des voreilenden und/oder des nacheilenden Metallprodukts eine Zunderschicht mit einer nach Maßgabe des Reibwertes vorbestimmten Dicke d gezielt aufgebracht wird bzw. indem man dort die Zunderschicht gezielt entstehen lässt.

Demnach bezieht sich die vorliegende Erfindung ausschließlich auf das lineare oder oszillatorische Reibschweißverfahren. Für den Erfolg dieses Schweißverfahrens ist es wichtig, dass der Reibwert zwischen den zu schweißenden Enden bzw. Stirnseiten der Metallprodukte in einem vorbestimmten Wertebereich liegt. Ist der Reibwert zu groß, dann sind die Kräfte, die beim Reibschweißen aufgebracht werden müssen, um die beiden Metallprodukte relativ zueinander zu bewegen, unnötig groß. Ist der Reibwert andererseits zu klein, so stellt sich eine gewünschte bzw. erforderliche Temperatur bzw. Temperaturerhöhung nicht ein.

Der Begriff "Metallprodukt" meint z. B. Brammen, Knüppel, insbesondere mit quadratischem Querschnitt, und Profile, z. B. T-Profile, Doppel-T-Profile, Schienen oder U-Profile etc.

Es ist das Verdienst der Erfinder, erkannt zu haben, dass der Reibwert zwischen den zu verschweißenden Enden von Metallprodukten von der Dicke der Zunderschicht auf diesen Enden abhängt und dass demzufolge ein gewünschter stahlsortenabhängiger Reibwert einfach durch Aufbringen einer Zunderschicht mit einer vorbestimmten Dicke eingestellt werden kann. Die Dicke der Zunderschicht wird dann so eingestellt, dass sich der gewünschte Reibwert einstellt. Dabei verhält sich die Dicke der Zunderschicht umgekehrt zum Reibwert: Eine zu große Zunderschichtdicke bedeutet einen zu kleinen Reibwert und umgekehrt. Zur Einstellung des gewünschten Reibwertes innerhalb des vorbestimmten Reibwertebereiches lässt man ganz gezielt Zunder mit einer bestimmten Schichtdicke auf den zu verschweißenden Enden bzw. Stirnseiten der Metallprodukte entstehen. Wenn der Reibwert auf diese Weise auf den gewünschten Wert eingestellt ist, lassen sich die zu verschweißenden Metallprodukte besser relativ zueinander bewegen und der Reibprozess führt zu einer gewünschten starken Temperaturerhöhung in einer sehr dünnen Schicht an den Enden der Metallprodukte, was zu besseren Schweißergebnissen führt.

Das Reibschweißen erfolgt bei der vorliegenden Erfindung unter normalen Umgebungsbedingungen, insbesondere nicht in einer Inertgasatmosphäre.

Eine wichtige Größe, die den Reibschweißprozess charakterisiert, ist das Verhältnis der Oszillationskraft zur Anpresskraft der Metallprodukte. Dazu wird der Reibwert $\mu$ wie folgt definiert:

$$\mu = \frac{\overline{|F_{OS}|}}{F_{PR}}$$

$|F_{OS}|$ - Mittelwert des Betrages der Oszillationskraft
$F_{PR}$ - Anpresskraft.

Nur wenn dieser Reibwert in einem Fenster von

$$0{,}1 < \mu < 1{,}5$$

liegt, lässt sich eine gute Verschweißung innerhalb der möglichen Randbedingungen und gewählten Prozessparameter erreichen.

Die Zunderschichtdicke d auf den zu verbindenden Oberflächen muss dazu in einem Bereich von

$$5\mu m < d < 100\mu m$$

liegen, oder vorzugsweise

$$15\mu m < d < 50\mu m.$$

Dabei repräsentiert die Obergrenze für die Dicke der Zunderschicht einen Reibwert am unteren Ende des Reibwertbereiches; und umgekehrt. Die Zunderschicht der Dicke d sollte auf jeder der beiden miteinander zu verschweißenden Stirnseiten vorhanden sein. Bei nur einseitiger Ausbildung muss die Dicke der Zunderschicht entsprechend größer sein.

Bei dem erfindungsgemäßen Verfahren wird das Reibschweißen durchgeführt bei warmen Metallprodukten, wie sie typischerweise aus einer Gießanlage oder als Vorband aus einer Vorstraße auslaufen. Die warmen Metallprodukte haben typischerweise eine Temperatur zwischen 800°C und 1.250°C, vorzugsweise zwischen 900°C und 1.160°C.

Für das Aufbringen der Zunderschicht sind verschiedene alternative Verfahren vorgesehen: Im einfachsten Fall werden die schopfgeschnittenen Stirnseiten der Metallprodukte für eine vorbestimmte Zeitdauer t mit beispielsweise t < 60 Sek., vorzugsweise t < 15 Sek. der Umgebungsluft ausgesetzt. Je größer die Zeitdauer desto größer ist die Dicke der Zunderschicht, die sich auf den Stirnseiten bildet.

An Luft werden diese Zunderschichtdicken d bei einer Temperatur der Metallprodukte von 1.150°C nach folgenden Zeiten t erreicht:

$$d = \ \ 5\mu m \rightarrow t \approx \ \ 0{,}5s$$

$$d = 100\mu m \rightarrow t \approx 60s$$

$$d = \ \ 15\mu m \rightarrow t \approx \ \ 2s$$

$$d = \ \ 50\mu m \rightarrow t \approx 15s.$$

Bei anderen oxidierenden Gasen ergeben sich, abhängig vom Sauerstoffgehalt, andere Zeiten.

Auf diese Weise kann über die gewählte bzw. vorbestimmte Zeitdauer der Exposition der Stirnseiten an der Umgebungsluft die Zunderschicht auf eine gewünschte Dicke eingestellt werden.

Alternativ kann anstelle der Umgebungsluft auch eine Beaufschlagung der Stirnseiten mit Druckluft oder mit einem oxidierenden Gas, z. B. einem Gemisch aus Stickstoff und Sauerstoff mit einem geringeren oder höheren Sauerstoffgehalt als in der Luft erfolgen, bevor die Stirnseiten miteinander reibverschweißt werden. In jedem der genannten alternativen Fälle kann über die Zeitdauer der Exposition der Reibwert zwischen den miteinander reibzuverschweißenden Metallprodukten mit hinreichender Genauigkeit eingestellt werden, weil gemäß der vorliegenden Erfindung der Zusammenhang zwischen der Dicke der Zunderschicht und dem Reibwert bekannt und in Form von beispielsweise Tabellen hinterlegt ist.

Die gezielte Einstellung der Zunderschichtdicke und damit des Reibwertes kann dazu dienen, die Prozessparameter (z. B. Oszillationsfrequenz, Oszillationsamplitude oder Oszillationskraft) in einem gewünschten Fenster zu halten.

## Patentansprüche

1. Verfahren zum Verschweißen zweier warmer Metallprodukte; aufweisend folgende Schritte:

   Durchführen eines Schopfschnittes an der hinteren Stirnseite eines in einer Transportrichtung voreilenden Metallproduktes;
   Durchführen eines Schopfschnittes an der vorderen Stirnseite eines in der Transportrichtung nacheilenden Metallproduktes; und
   Zusammenführen und Verschweißen des nacheilenden und des voreilenden Metallproduktes an ihren schopfgeschnittenen Stirnseiten, wobei das Verschweißen als lineares oder oszillatorisches Reibschweißen durchgeführt wird und der Reibwert $\mu$ zwischen den schopfgeschnittenen Stirnseiten in einem vorbestimmten Reibwertebereich liegt;
   **dadurch gekennzeichnet,**
   **dass** der Reibwert $\mu$ eingestellt wird, indem nach dem Schopfschneiden aber vor dem Verschweißen auf die Stirnseite des voreilenden und/oder des nacheilenden Metallproduktes eine Zunderschicht mit einer nach Maßgabe des Reibwertes vorbestimmten Dicke d aufgebracht wird.

2. Verfahren nach Anspruch 1,
   **dadurch gekennzeichnet,**
   **dass** für den Reibwertebereich gilt:

   $$0{,}1 < \mu < 1{,}5$$

3. Verfahren nach einem der vorangegangenen Ansprüche,
   **dadurch gekennzeichnet,**
   **dass** für die Dicke d der Zunderschicht gilt:

   $$5\mu m < d < 100\mu m.$$

4. Verfahren nach einem der vorangegangenen Ansprüche,

   **dadurch gekennzeichnet,**
   **dass** für die Temperatur T des warmen Metallproduktes gilt:
   800°C < T < 1250°C, vorzugsweise 900°C < T < 1160°C.

5. Verfahren nach einem der vorangegangenen Ansprüche,
   **dadurch gekennzeichnet,**

**dass** das Aufbringen der Zunderschicht mit der vorbestimmten Dicke erfolgt, indem die Stirnseiten der Metallprodukte unmittelbar nach dem Schopfschnitt für eine vorbestimmte Zeitdauer t mit t<60s, vorzugsweise t<15s der Umgebungsluft, einer Druckluftbeaufschlagung oder einem oxidierenden Gas, zum Beispiel einem Gemisch aus Stickstoff und Sauerstoff mit einem geringeren Sauerstoffgehalt als Luft, ausgesetzt werden, bevor sie miteinander reibverschweißt werden.

6. Verfahren nach einem der vorangegangenen Ansprüche,
**dadurch gekennzeichnet,**
**dass** die warmen Metallprodukte, nachdem sie miteinander verschweißt wurden, warmgewalzt werden.

**Claims**

1. Method of welding two hot metal products, comprising the following steps:

   executing a cropping cut at the rear end of a metal product leading in a transport direction;
   executing a cropping cut at the front end of a metal product trailing in the transport direction; and
   leading together and welding the trailing and leading metal product at the cropped ends thereof, wherein the welding is performed as linear or oscillating friction welding and the coefficient of friction $\mu$ between the cropped ends lies in a predetermined coefficient of friction range;
   **characterised in that**
   the coefficient of friction $\mu$ is set **in that** after the cropping, but before the welding a scale layer with a thickness d predetermined in accordance with the coefficient of friction is applied to the end of the leading and/or trailing metal product.

2. Method according to claim 1,
**characterised in that**
the coefficient of friction range is:

$$0.1 < \mu < 1.5$$

3. Method according to one of the preceding claims,
**characterised in that**
the thickness d of the scale layer is:

$$5\mu m < d < 100\mu m$$

4. Method according to any one of the preceding claims,
**characterised in that**
the temperature T of the hot metal product is:
$800°C < T < 1250°C$, preferably $900°C < T < 1160°C$

5. Method according to any one of the preceding claims,
**characterised in that**
the application of the scale layer with the predetermined thickness is carried out **in that** the ends of the metal product directly after the cropping cut are exposed for a predetermined time period t, wherein t < 60 s, preferably t < 15 s, to the ambient air, to a compressed air loading or to an oxidising gas, for example a mixture of nitrogen and oxygen with a lower oxygen content than air, before they are friction-welded together.

6. Method according to any one of the preceding claims,
**characterised in that**
the hot metal products are hot-rolled after they have been welded together.

**Revendications**

1. Procédé destiné au soudage de deux produits métalliques chauds, qui présente les étapes suivantes dans lesquelles :

   on procède à un affranchissement des bouts ou à un éboutage sur le côté frontal arrière d'un produit métallique, qui est disposé à l'avant dans une direction de transport ;
   on procède à un affranchissement des bouts ou à un éboutage sur le côté frontal avant d'un produit métallique, qui est disposé à l'arrière dans la direction de transport ; et
   on assemble et on soude le produit métallique disposé à l'arrière et le produit métallique disposé à l'avant à leurs côtés frontaux qui ont été soumis à un éboutage ; dans lequel on met en oeuvre le soudage sous la forme d'un soudage par friction de type linéaire ou de type oscillatoire et la valeur de friction $\mu$ entre les côtés frontaux qui ont été soumis à un éboutage se situe dans une plage de valeurs de friction qui a été déterminée au préalable ;
   **caractérisé en ce que** l'on règle la valeur de friction $\mu$ par le fait d'appliquer, après la mise en oeuvre de l'éboutage, mais avant la soudure sur le côté frontal du produit métallique qui est disposé à l'avant et/ou du produit métallique qui est disposé à l'arrière, une couche de calamine qui possède une épaisseur d qui a été déterminée au préalable en prenant comme référence la valeur de friction.

2. Procédé conformément à la revendication 1, **caractérisé en ce que**, en ce qui concerne la plage de valeurs de friction, on se réfère à l'équation :

$$0{,}1 < \mu < 1{,}5.$$

3. Procédé conformément à l'une quelconque des revendications précédentes, **caractérisé en ce que**, en ce qui concerne l'épaisseur d de la couche de calamine, on se réfère à l'équation :

$$5\ \mu m < d < 100\ \mu m.$$

4. Procédé conformément à l'une quelconque des revendications précédentes, **caractérisé en ce que**, en ce qui concerne la température T du produit métallique chaud, on se réfère à l'équation :
800 °C < T < 1.250 °C, de préférence 900 °C < 1160 °C.

5. Procédé conformément à l'une quelconque des revendications précédentes, **caractérisé en ce que** l'application de la couche de calamine avec l'épaisseur qui a été prédéfinie a lieu par l'intermédiaire d'une exposition des côtés frontaux des produits métalliques directement après la mise en œuvre de l'éboutage pendant un laps de temps t qui a été prédéfini, t étant inférieur à 60 secondes, de préférence t étant inférieur à 15 secondes, à l'air environnant, à une sollicitation avec de l'air sous pression ou à un gaz oxydant, par exemple à un mélange d'azote et d'oxygène qui possède une teneur en oxygène qui est inférieure à celle de l'air, avant de soumettre les produits métalliques en question à un soudage réciproque par friction.

6. Procédé conformément à l'une quelconque des revendications précédentes, **caractérisé en ce que**, après avoir procédé au soudage réciproque des produits métalliques chauds, on soumet ces derniers à un laminage à chaud.

**EP 3 887 086 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0492368 B1
- EP 0510713 B1
- DE 69207673 T2
- DE 60033495 T2
- JP 10230302 A
- DE 69106473 T2
- DE 69628648 T2
- DE 10062193 A1
- DE 932303 C
- WO 2017140886 A1